# EUROPEAN PATENT SPECIFICATION

(11) **EP 4 424 449 B1**
(45) Date of publication and mention of the grant of the patent: **10.06.2026**
(21) Application number: 22898407.6
(22) Date of filing: 10.11.2022
(51) Int. Cl.: B23K 9/095, B23K 9/073, B23K 9/09, B23K 9/12, B23K 9/02

(54) **ARC WELDING METHOD AND ARC WELDING DEVICE**
LICHTBOGENSCHWEISSVERFAHREN UND LICHTBOGENSCHWEISSVORRICHTUNG
PROCÉDÉ DE SOUDAGE À L'ARC ET DISPOSITIF DE SOUDAGE À L'ARC

(30) Priority: 29.11.2021 JP 2021193502
(43) Date of publication of application: 04.09.2024
(60) Divisional application: 26176444.3
(73) Proprietor: Panasonic Intellectual Property Management Co., Ltd., Osaka-shi, Osaka 540-6207 (JP)
(72) Inventor: MATSUOKA, Noriyuki, Kadoma-shi, Osaka 571-0057 (JP); OOGURI, Kazuya, Kadoma-shi, Osaka 571-0057 (JP); SHIMOURA, Akiya, Kadoma-shi, Osaka 571-0057 (JP); KOWA, Masaru, Kadoma-shi, Osaka 571-0057 (JP); FUJIWARA, Junji, Kadoma-shi, Osaka 571-0057 (JP)
(74) Representative: Novagraaf International SA
(86) International application number: PCT/JP2022/041869
(87) International publication number: WO 2023/095623

(56) References cited:
- WO-A1-2013/190746
- WO-A1-2016/075871
- WO-A1-2019/146318
- JP-A- 2012 529 991

## Description

### TECHNICAL FIELD

The present invention relates to an arc welding method and an arc welding device.

### BACKGROUND ART

Patent Document 1 relates to consumable electrode-type arc welding in which pulse welding and short-circuit welding are alternately repeated, and discloses setting a welding current as of immediately before the shift from the pulse welding to the short-circuit welding to be lower than a base current in a pulse.

### CITATION LIST

### PATENT DOCUMENT

Patent Document 1: PCT International Publication No. WO 2016/059805

### SUMMARY OF THE INVENTION

### TECHNICAL PROBLEM

In a case of arc welding two members with different heat capacities due to differences in the plate thickness or differences in the material, conducting pulse welding, whose heat input is high, on a member with a smaller plate thickness, for example, may result in burnt through of the member and cause a joining failure.

It is therefore an object of the present invention to improve the quality of joining members with different heat capacities.

### SOLUTION TO THE PROBLEM

The invention is defined in independent claims 1 and 11. Further optional features are defined in the dependent claims.

This procedure can improve the quality of joining members with different heat capacities. Specifically, the short-circuit welding whose heat input is low is conducted on the first member with the smaller heat capacity, thereby making it possible to reduce burn-through of the first member. Further, the pulse welding whose heat input is high is conducted on the second member with the larger heat capacity, thereby making it possible to reduce insufficient penetration.

In this manner, by switching the welding mode in synchronization with the weaving motion of the welding torch, a proper heat can be input in welding a welding target having different plate thicknesses or a welding target in a complicated shape. As a result, it is possible to achieve a desired penetration depth without causing burn-through.

It is also possible to reduce the heat input to the welding target and increase the amount of welding of the welding wire by the AC welding in which the welding current is made to flow through the welding wire and the welding target so that the reverse polarity period and the straight polarity period are alternately repeated multiple times, by changing the polarity of the welding current flowing through the welding wire and the welding target.

Specifically, in the AC welding, the welding target melts in the reverse polarity period, while the welding wire melts in the straight polarity period. That is, unlike the DC welding, the reverse polarity (i.e., the reverse polarity period), in which the welding wire serves as a positive electrode and the welding target as a negative electrode, does not continue in the AC welding. In the AC welding, the polarity of the welding current flowing through the welding wire and the welding target is changed so that the reverse polarity period and the straight polarity period are alternately repeated multiple times. Accordingly, the straight polarity (i.e., the straight polarity period) in which the welding wire serves as a negative electrode and the welding target as a positive electrode periodically occurs. The amount of heat input to the welding target is thus reduced, and a large amount of the welding wire melts, resulting in an increase in the amount of welding.

According to the invention, at least one of the first welding or the second welding includes third welding in which a short-circuit welding period for the short-circuit welding and a pulse welding period for the pulse welding are switched from one to the other multiple times.

The third welding has characteristics in the middle of those of the short-circuit welding and the pulse welding, with a higher heat input compared to the short-circuit welding and lower heat input compared to the pulse welding. The third welding can reduce a rapid change in the heat input at the time when the welding current is changed.

A further aspect is an embodiment of the arc welding method according to the invention.

The method further includes: if the third welding is conducted in the first welding, setting a ratio of the short-circuit welding period for the short-circuit welding in the third welding to be higher than a ratio of the pulse welding period for the pulse welding; and if the third welding is conducted in the second welding, setting the ratio of the pulse welding period for the pulse welding in the third welding to be higher than the ratio of the short-circuit welding period for the short-circuit welding.

The method includes the short-circuit welding period for the short-circuit welding and the pulse welding period for the pulse welding. When the first member with a smaller heat capacity is welded by the third welding, the ratio of the short-circuit welding period for the short-circuit welding whose heat input is low as compared to the pulse welding is set to be higher. When the second member with a larger heat capacity is welded by the third welding, the ratio of the pulse welding period for the pulse welding whose heat input is high is set to be higher. This makes it possible to conduct the third welding under proper conditions.

A further aspect is an embodiment in which the method further includes: switching welding in order of the pulse welding, the third welding, and the short-circuit welding before the welding torch crosses the boundary position from the second member toward the first member in the second welding.

The welding gradually shifts to the short-circuit welding before the welding torch is moved from the second member with the larger heat capacity toward the first member with the smaller heat capacity. Accordingly, the pulse welding, the third welding, and the short-circuit welding are performed in coordination with each other, making it possible to reduce a rapid change in the heat input.

In a further aspect, the method further includes: gradually changing, in the third welding, at least one of the number of pulses in the pulse welding or the number of short circuits in the short-circuit welding.

The gradual change in at least one of the number of pulses during the pulse welding or the number of short circuits during the short-circuit welding can reduce a rapid change in the heat input.

In a further aspect, a welding current applied when the welding torch crosses the boundary position from the first member toward the second member is larger than a welding current before the welding torch crosses the boundary position.

The welding current applied when the welding torch crosses the boundary position is an average welding current which is an average current as the moving average of the welding current. The average welding current applied to the welding wire when the welding torch crosses the boundary position is increased, thereby making it possible to increase the amount of feeding of the welding wire at the boundary position and secure a sufficient thickness of beads. It is thus possible to fill the step height at the boundary between the thinner plate and the thicker plate.

In a further aspect, a ratio of the number of short circuits of the short-circuit welding in the third welding when the welding torch crosses the boundary position from the second member toward the first member is higher than the ratio of the number of short circuits of the short-circuit welding in the third welding before the welding torch crosses the boundary position.

The ratio of the number of short circuits at the time when the welding torch crosses the boundary position is set to be larger than the ratio of the number of short circuits before the welding torch crosses the boundary position, so that the ratio of the number of short circuits is increased from before and when the welding torch crosses the boundary position. This makes it possible to secure a sufficient thickness of the beads at the boundary position in the state of low heat input. It is thus possible to fill the step height at the boundary between the thinner plate and the thicker plate.

In a further aspect, the weaving motion is a spiral weaving motion moving along a spiral trajectory, and a distance from a center position of the spiral trajectory to a rear end of the spiral trajectory in a direction of welding on the boundary position is shorter than a distance to a front end of the spiral trajectory in the direction of welding.

The distance from the center position of the spiral trajectory to the rear end of the spiral trajectory in the direction of welding on the boundary position is set shorter than the distance to the front end of the spiral trajectory in the direction of welding, which reduces the penetration and can secure a sufficient thickness of the beads.

In a further aspect, in at least one of the first welding or the second welding, the welding wire is fed at a constant speed.

In a further aspect, in at least one of the first welding or the second welding, the welding wire is fed while a forward movement and a backward movement of the welding wire are alternately repeated periodically.

This feeding can reduce the heat input to the welding target. Specifically, when the welding wire is short-circuited to the welding target, the welding voltage becomes close to 0 V, and the heat input amount, which is the amount of heat per unit time, becomes extremely small.

To address this, in moving the welding wire forward and backward, the welding wire is moved forward, and then when the welding wire is short-circuited to the welding target, the welding wire is moved backward. When an arc occurs between the welding wire and the welding target, the welding wire is accelerated to move forward. This dramatically increases the number of short circuits as compared to constant feeding of the welding wire toward the welding target. It is thus possible to obtain the advantage of cooling the welding target periodically.

The forward and backward movements of the welding wire at the time of short circuit can reduce spatter and improve the quality of welding.

In a further aspect, the weaving motion is a spiral weaving motion moving along a spiral trajectory, and the third welding of switching between the short-circuit welding period for the short-circuit welding and the pulse welding period for the pulse welding multiple times is performed in the spiral weaving motion, and a ratio of the pulse welding period is set to be higher on a side forward of the center position of the spiral trajectory in the direction of welding, while a ratio of the short-circuit welding period is set to be higher on a side rearward in the direction of welding.

Since the heat input of the pulse welding is higher than the heat input of the short-circuit welding, a weld pool is formed by increasing, at the front in the direction of welding, the ratio of the pulse welding period for the pulse welding whose heat input is high; and the weld pool is cooled by increasing, at the rear in the direction of welding in the spiral weaving motion, the ratio of the short-circuit welding period for the short-circuit welding whose heat input is lower than that of the pulse welding. It is thus possible to reduce burn-through of the welding target and make the scaly wave pattern of the beads clear.

According to the twelfth aspect, In the device according to the invention and defined in claim 11, since the heat input of the short-circuit welding is lower than the heat input of the pulse welding, the short-circuit welding whose heat input is low is conducted on the first member with the smaller heat capacity, thereby making it possible to reduce burn-through of the first member. Further, the pulse welding whose heat input is high is conducted on the second member with the larger heat capacity, thereby making it possible to reduce insufficient penetration.

### ADVANTAGES OF THE INVENTION

According to the aspects of the present disclosure, it is possible to improve the quality of joining members with different heat capacities.

### BRIEF DESCRIPTION OF THE DRAWINGS

FIG. 1 is a diagram illustrating a schematic configuration of an arc welding device according to an embodiment.
FIG. 2 is a diagram illustrating a welding current, a welding voltage, a waveform of the feeding speed of a welding wire, and a droplet transfer state in short-circuit welding.
FIG. 3 is a diagram illustrating a welding current, a welding voltage, a waveform of the feeding speed of a welding wire, and a droplet transfer state in pulse welding.
FIG. 4 is a diagram illustrating a welding current, a welding voltage, and a waveform of the feeding speed of a welding wire in pulse mix welding.
FIG. 5 is a side sectional view illustrating a state of performing arc welding in spiral weaving motion.
FIG. 6 is a perspective view illustrating the state of performing arc welding in spiral weaving motion.
FIG. 7 is a perspective view for explanation of the timing of switching among short-circuit welding, pulse welding, and pulse mix welding.
FIG. 8 is a diagram illustrating a trajectory of spiral weaving motion according to a variation of the embodiment.

### DESCRIPTION OF EMBODIMENT

An embodiment of the present invention will be described in detail with reference to the drawings. The following description of the embodiment is merely an example in nature, and is not intended to limit the scope, applications, or use of the present invention.

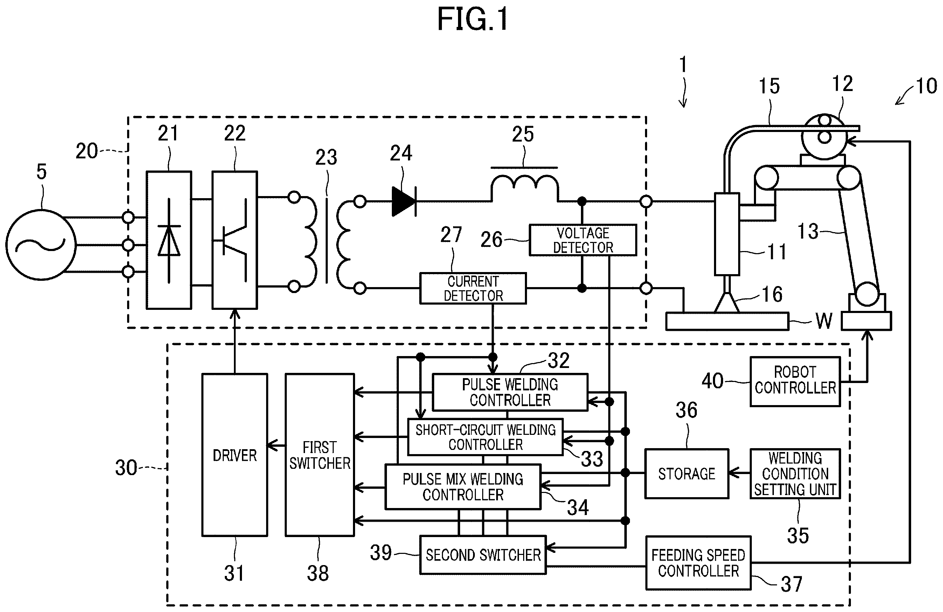

As shown in FIG. 1, an arc welding device 1 welds a welding target W by generating an arc 16 between a welding wire 15, which is a consumable electrode, and the welding target W.

The arc welding device 1 includes a welding unit 10 and a controller 30. The welding unit 10 includes a welding torch 11, a feeding motor 12, a robot 13, and a power converter 20. The feeding motor 12 feeds the welding wire 15 to the welding torch 11 at a predetermined feeding speed.

The robot 13 includes a plurality of joints. The welding torch 11 is attached to the distal end portion of the robot 13. The robot 13 moves the position of the welding torch 11 with respect to the welding target W. As will be described in detail later, the robot 13 causes the welding torch 11 to move in spiral weaving motion along a spiral trajectory.

The power converter 20 includes a primary rectifier 21, a switching element 22, a main transformer 23, a secondary rectifier 24, a reactor 25, a voltage detector 26, and a current detector 27.

The primary rectifier 21 rectifies the output from an input power supply 5 and outputs the resultant. The switching element 22 converts the DC output from the primary rectifier 21 into an AC. The switching element 22 controls a welding output consisting of a welding current and a welding voltage.

The main transformer 23 converts the AC voltage output from the switching element 22 The output of the main transformer 23 is output as a welding output via the secondary rectifier 24 and the reactor 25. The secondary rectifier 24 rectifies the secondary output of the main transformer 23. The voltage detector 26 detects a welding voltage V. The current detector 27 detects a welding current I.

The controller 30 includes a driver 31, a short-circuit welding controller 33 for controlling first welding including short-circuit welding, a pulse welding controller 32 for controlling second welding including pulse welding, a pulse mix welding controller 34 for controlling third welding, which will be described later, a welding condition setting unit 35, a storage 36, a feeding speed controller 37, a first switcher 38, a second switcher 39, and a robot controller 40.

The driver 31 controls the switching element 22. The pulse welding controller 32 performs the control for the pulse welding. The short-circuit welding controller 33 performs the control for the short-circuit welding. The pulse mix welding controller 34 performs the control for the third welding.

The third welding is a welding mode in which the short-circuit welding and the pulse welding are alternately repeated multiple times, each at given number of times. In this embodiment, the third welding is defined as "pulse mix welding," which will be used in the following description.

In the pulse mix welding, it is preferable that the feeding of the welding wire 15 is basically the forward and backward movements of the welding wire 15 in the case of the short-circuit welding, and is basically constant feeding of the welding wire 15 in the case of the pulse welding. However, the feeding is not limited thereto. For example, the feeding speed of the welding wire 15 may be changed during the pulse welding. Alternatively, the welding wire 15 may be fed at a constant speed during the short-circuit welding.

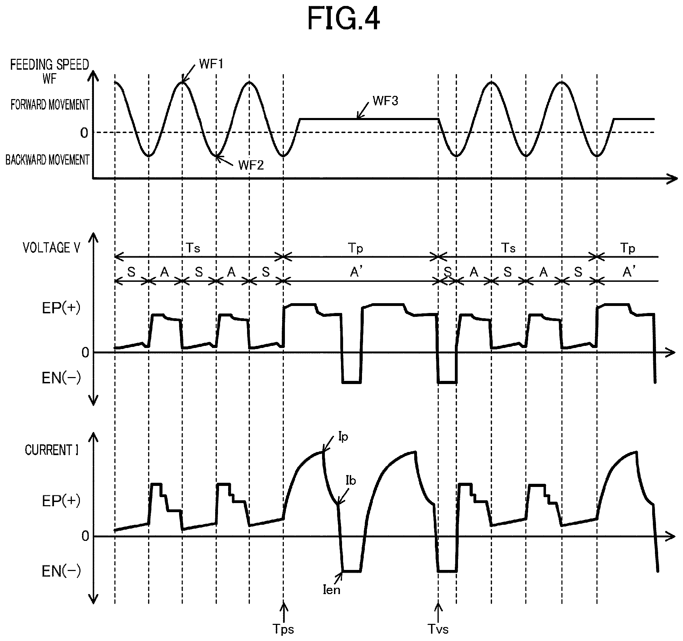

In the pulse mix welding, the number of pulses during the pulse welding and/or the number of short circuits during the short-circuit welding may be gradually changed. The gradual change in at least one of the number of pulses during the pulse welding or the number of short circuits during the short-circuit welding can reduce a rapid change in the heat input. For example, in FIG. 4 which will be described later, the two times of pulses and three times of short circuits is repeated, but the times may be changed to three times of pulses and two times of short circuits, which is repeated multiple times. The number of pulses and the number of short circuits are merely examples and are not limited thereto.

The number of pulses and the number of short circuits may be gradually changed, for example, at each predetermined welding distance, each predetermined welding time, or each preset teaching point.

The welding condition setting unit 35 sets welding conditions including a welding current and a welding voltage. Specifically, the welding condition setting unit 35 sets the welding current set for welding, the welding voltage set for welding, the feeding speed of the welding wire 15, the kind of shielding gas, the material of the welding wire 15, the diameter of the welding wire 15, the period for the pulse welding and the number of pulse outputs, the period for the short-circuit welding and the number of short-circuit outputs, and other conditions.

The shielding gas is selected depending on the material of the welding wire and the purpose. For example, argon gas (Ar) is used in welding an aluminum alloy. MIG gas (98% of Ar and 2% of O2) is used in welding stainless steel. MAG gas (80% of Ar and 20% of CO2) is used in welding mild steel. When emphasis is placed on cost reduction in welding mild steel, carbon dioxide (CO2) is used. The kind of the shielding gas is merely an example.

The storage 36 stores predetermined thresholds. The thresholds stored in the storage 36 are thresholds of welding parameters related to the heat input given to the welding target W, such as the welding current, the welding voltage, and the feeding speed. The storage 36 outputs the welding motion, proper control values, the feeding speed of the welding wire 15, and other paraments stored in advance, based on the output from the welding condition setting unit 35.

The feeding speed controller 37 controls the feeding speed of the welding wire 15 in accordance with the set current for the welding current set by the welding condition setting unit 35. Here, the feeding speed and the welding current are correlated with each other. More specifically, there is a correlation between the average welding speed (also referred to as the amount of feeding) as a moving average and the average welding current (also referred to as a set current) that is an average current as a moving average.

The first switcher 38 outputs a signal for welding output of any of the pulse welding controller 32, the short-circuit welding controller 33, and the pulse mix welding controller 34 in accordance with the output of the storage 36.

The second switcher 39 selects the output of the feeding speed of any one of the pulse welding controller 32, the short-circuit welding controller 33, and the pulse mix welding controller 34 in accordance with the output of the storage 36.

The robot controller 40 controls the operation of the robot 13. The robot controller 40 gives a current command to a motor (not shown) of each axis of the robot 13 so as to move the welding torch 11 in the direction of welding of the welding target W.

### <Method of Controlling Arc Welding Device>

Next, an operation of the arc welding device 1 will be described. The arc welding device 1 applies a current between the welding wire 15 and the welding target W, while shielding the welding point of the welding target W from the outside air by supplying the shielding gas through a gas supply port (not shown).

Accordingly, an arc 16 occurs between the welding wire 15 and the welding target W. The heat of the arc 16 melts a tip end portion of the welding wire 15 and part of the welding target W. The melted welding wire 15 turns into a droplet, which drops onto the welding target W and forms a weld pool together with the part of the welding target W melted by the heat of the arc 16.

The welding torch 11 moves in the direction of welding in the spiral weaving motion on the welding target W. Beads are formed on the welding target W along with the movement of the welding torch 11, and the welding target W is welded.

The arc welding device 1 welds the welding target W, while switching among the short-circuit welding, the pulse welding, and the pulse mix welding.

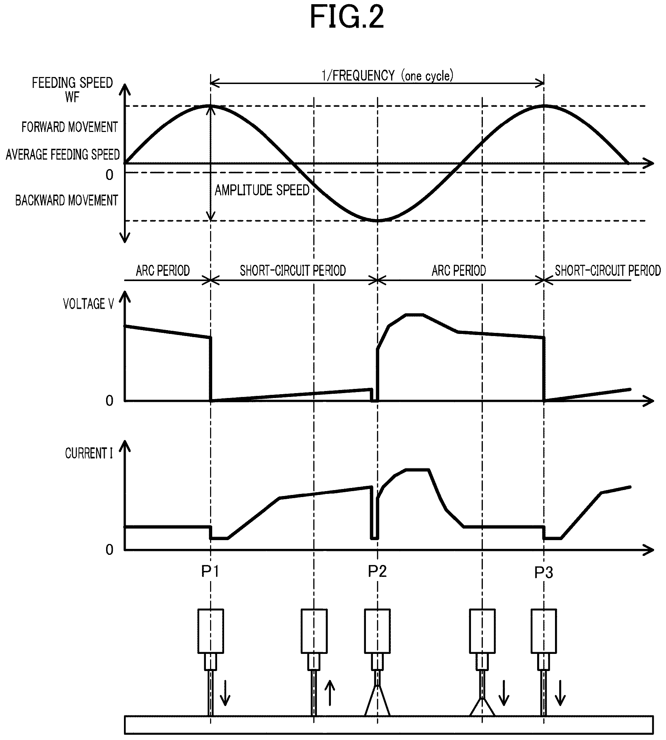

FIG. 2 is a diagram illustrating the welding current, the welding voltage, the waveform of the feeding speed of the welding wire, and a droplet transfer state in the short-circuit welding. In FIG. 2, the vertical axis represents the welding current I, the welding voltage V, and the feeding speed WF, while the horizontal axis represents time.

In the short-circuit welding, the welding current I is controlled so that a short-circuit period and an arc period alternate. The short-circuit period is a short-circuit state in which the welding wire 15 and the welding target W are in contact with each other and short-circuited. The arc period is an arc state in which the arc 16 occurs between the welding wire 15 and the welding target W. In the short-circuit period, the welding wire 15 and the welding target W are short-circuited. In the arc period, the arc 16 occurs between the welding wire 15 and the welding target W. In the short-circuit welding, a welding current of 100 A, for example, is applied to the welding wire 15.

In FIG. 2, P1 indicates the point of time when the short circuit is started. In the short-circuit period from P1 to P2, the initial short-circuit current is output for a predetermined time from the time point P1, and the short-circuit current is gradually increased thereafter.

P2 indicates the time point when the short-circuit state ends and an arc state occurs. In the arc period from P2 to P3, a first welding current, which is a peak current, is output immediately after the occurrence of the arc, and the current then shifts to a second welding current which is lower than the first welding current. The period from P2 to P3 is the arc period that is an arc state in which the arc 16 occurs between the welding wire 15 and the welding target W. In the arc period, the arc 16 occurs between the welding wire 15 and the welding target W, and a droplet is formed at the tip end portion of the welding wire 15 by the heat of the arc 16, which also melts part of the welding target W.

P3 indicates the time point when the next short circuit after the one at P1 has occurred. The state at P3 is the same as the state at the time point P1. When a short circuit occurs between the welding wire 15 and the welding target W that have been brought into contact with each other, the droplet formed at the tip end portion of the welding wire 15 in the arc period is short-circuited and transferred to the welding target W, which forms a weld pool and causes the short-circuit welding.

In this manner, in the short-circuit welding, the short-circuit period from P1 (P3) to P2 and the short-circuit period from P2 to P3 are alternately repeated periodically.

In the example shown in FIG. 2, feeding of the welding wire is controlled such that the forward movement and the backward movement are alternately repeated periodically multiple times in accordance with the shape of a sine wave having a predetermined frequency and a predetermined speed amplitude as a basic waveform. At a peak of the forward movement, a short circuit occurs around the time point P1. At a peak of the backward movement, an arc occurs around the time point P2. At a peak of the forward movement after the time point P2, the next short circuit occurs around the time point P3.

As described above, the period from P1 to P3 is defined as one cycle of the control, and this cycle is repeated to perform welding.

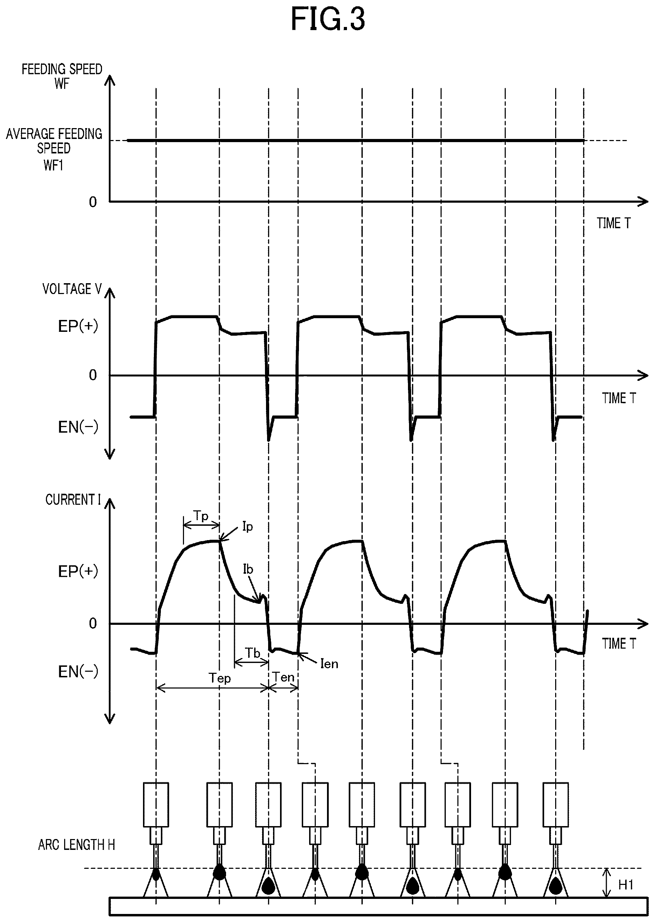

FIG. 3 is a diagram illustrating the welding current, the welding voltage, the waveform of the feeding speed of the welding wire, and a droplet transfer state in pulse welding. In FIG. 3, the vertical axis represents the welding current I, the welding voltage V, and the feeding speed WF, while the horizontal axis represents time. In the pulse welding, the welding current is set to 200 A, for example.

The arc welding device 1 sets the wire feeding speed based on the magnitude of the set welding current I. Based on this wire feeding speed, various pulse parameters forming the AC pulse waveform are set.

Here, as shown in FIG. 3, the pulse parameters include a peak current value Ip, a base current value Ib, a peak current period Tp, and a base current period Tb which are in the reverse polarity period Tep, a straight polarity period Ten, and a straight polarity current value Ien in the straight polarity period Ten, for example.

In the example shown in FIG. 3, the feeding speed of the welding wire 15 is maintained at a constant feeding speed WF 1 in the AC pulse welding as the AC welding. In the straight polarity period Ten of the straight polarity area EN(-), the welding current I is controlled so that the welding wire 15 serves as a negative electrode and the welding target W as a positive electrode. In the reverse polarity period Tep of the reverse polarity area EP(+), the welding current I is controlled so that the welding wire 15 serves as a positive electrode and the welding target W as a negative electrode. Accordingly, the absolute value of the welding current I gradually increases toward the peak current value Ip in the reverse polarity period Tep of the reverse polarity area EP(+) and is maintained at the peak current value Ip in the peak current period Tp.

The absolute value of the welding current I then gradually decreases from the peak current value Ip toward the base current value Ib and is maintained at the base current value Ib in the base current period Tb. After that, the reverse polarity period Tep of the reverse polarity area EP(+) is switched to the straight polarity period Ten of the straight polarity area EN(-), and the welding current I changes from the base current value Ib to the straight polarity current value Ien.

The arc welding device 1 generates an arc 16 between the welding wire 15 and the welding target W, thereby forming a droplet at the tip end portion of the welding wire 15 by the heat of the arc 16, which also melts part of the welding target W.

The droplet formed at the tip end portion of the welding wire 15 is transferred from the tip end of the welding wire 15 and adheres to the welding target W by the droplet transfer, thereby forming a weld pool in the welding target W. In this manner, the arc 16 continuously occurs at the peak current and the base current without a short circuit between the welding wire 15 and the welding target W, and a droplet formed on the tip end of the welding wire 15 is separated in the air from the tip end of the welding wire 15 and transferred to the welding target W so that one-pulse one-drop occurs in which one droplet is transferred to the welding target W in each pulse with one peak current.

The arc welding device 1 maintains the arc length H of the arc 16 at the reference arc length H1 in a droplet separation state in which a droplet has been transferred.

FIG. 4 is a diagram illustrating the welding current, the welding voltage, and the waveform of the feeding speed of the welding wire in the pulse mix welding. The pulse mix welding is a welding mode in which a pulse welding period Tp for pulse welding and a short-circuit welding period Ts for short-circuit welding are alternately repeated multiple times. Pulse mix welding, which is a combination of DC short-circuit welding as DC welding and AC pulse welding as AC welding, will be described herein. In FIG. 4, the vertical axis represents the welding current I, the welding voltage V, and the feeding speed WF, while the horizontal axis represents time.

In the pulse welding period Tp, the AC pulse welding is performed. In the AC pulse welding, the welding current I is controlled such that the reverse polarity period, in which the welding wire 15 serves as a positive electrode and the welding target W as a negative electrode in the reverse polarity area EP(+), and the straight polarity period, in which the welding wire 15 serves as a negative electrode and the welding target W as a positive electrode in the straight polarity area EN(-) are alternately repeated.

In the short-circuit welding period Ts, the DC short-circuit welding is performed. In the DC short-circuit welding, the polarity is reversed in the reverse polarity area EP(+) in which the welding wire 15 serves as a positive electrode and the welding target W as a negative electrode; and the welding current I is controlled so that at least one short-circuit period S for causing a short circuit between the welding wire 15 and the welding target W and at least one arc period A for generating an arc 16 between the welding wire 15 and the welding target W alternately appear.

The pulse welding period Tp and the short-circuit welding period Ts are alternately repeated so that a pulse welding period Tp follows a short-circuit welding period Ts and another short-circuit welding period Ts follows the pulse welding period Tp.

The feeding speed controller 37 gives a control output to the feeding motor 12 so that the feeding speed WF of the welding wire 15 be a preset feeding speed in the pulse welding period Tp and the short-circuit welding period Ts. Accordingly, the welding wire 15 is fed at the constant third feeding speed WF3 in the pulse welding period Tp.

On the other hand, in the short-circuit welding period Ts, the feeding speed WF of the welding wire 15 is changed in accordance with a periodic waveform having a predetermined amplitude and a predetermined period. The feeding speed WF shown in FIG. 4 changes in accordance with a sine wave as a periodic waveform.

At a pulse start time point Tps at which the number of short circuits has reached the count preset by the welding condition setting unit 35, the short circuit is opened. At the time when the short circuit is opened, a peak of the reverse polarity of the AC pulse is output as it is by control. The pulse start time point Tps may also be a time point at which time preset by the welding condition setting unit 35 has elapsed. At the pulse start time point Tps, the pulse welding period Tp for the pulse welding starts.

The pulse mix welding controller 34 starts the pulse welding period Tp and generates the first pulse of the plurality of pulses.

Even after the pulse start time point Tps, the feeding speed WF continues to change in accordance with the periodic waveform of the short-circuit welding period Ts toward the third feeding speed WF3 of the welding wire 15 of the pulse welding period Tp preset by the welding condition setting unit 35. Once the feeding speed WF reaches the third feeding speed WF3 in the pulse welding period Tp, a feeder 14 feeds the welding wire 15 at the third feeding speed WF3.

After that, when the number of pulses has reached the count preset by the welding condition setting unit 35 in the pulse welding period Tp, or when the time preset by the welding condition setting unit 35 has elapsed in the pulse welding period Tp, the pulse mix welding controller 34 changes the welding current I to a peak current of the short-circuit welding directly from the peak of the straight polarity of the AC pulse, after the formation of the last pulse.

The feeding speed WF is changed from the third feeding speed WF3 of the pulse welding period Tp to a speed in accordance with the above-described periodic waveform when the welding current I is at a feed switching time point Tvs, thereby starting the feed of the welding wire 15 in the forward direction and the backward direction.

In this manner, the welding is performed, while alternating the pulse welding period Tp and the short-circuit welding period Ts under the set conditions and feeding the welding wire 15 at the most suitable feeding speed WF in each mode at that time.

Pulse mix welding is a combination of DC short-circuit welding as DC welding and AC pulse welding as AC welding: it is possible to reduce the heat input to the welding target W and increase the amount of welding of the welding wire 15 in the AC pulse welding in which the welding current I is made to flow through the welding wire 15 and the welding target W so that the reverse polarity period and the straight polarity period are alternately repeated multiple times, by changing the polarity of the welding current I flowing through the welding wire 15 and the welding target W.

Specifically, in the AC pulse welding, the welding target W melts in the reverse polarity period, while the welding wire 15 melts in the straight polarity period. That is, unlike the pulse DC welding, the reverse polarity (i.e., the reverse polarity period), in which the welding wire 15 serves as a positive electrode and the welding target W as a negative electrode, does not continue in the AC pulse welding. In the AC pulse welding, the polarity of the welding current I flowing through the welding wire 15 and the welding target W is changed so that the reverse polarity period and the straight polarity period are alternately repeated multiple times. Accordingly, the straight polarity (i.e., the straight polarity period) in which the welding wire 15 serves as a negative electrode and the welding target W as a positive electrode periodically occurs. The amount of heat input to the welding target W is thus reduced, and a large amount of the welding wire 15 melts, resulting in an increase in the amount of welding. The AC pulse welding has a larger amount of heat input than the DC short-circuit welding, and has a smaller amount of heat input than the DC pulse welding.

In this embodiment, the welding mode is switched among the short-circuit welding, the pulse welding, and the pulse mix welding in accordance with the heat capacity of the welding target W.

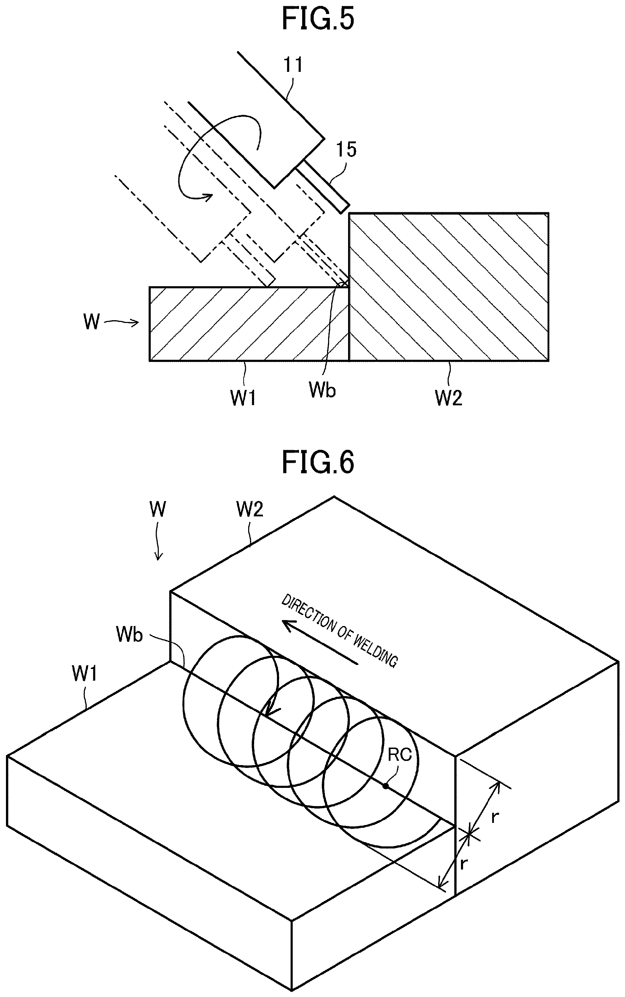

Specifically, as shown in FIGS. 5 and 6, the welding target W includes a first member W1 and a second member W2. The second member W2 has a greater plate thickness than the first member W1. The second member W2 thus has a larger heat capacity than the first member W1. The first member W1 and the second member W2 are made of aluminum, for example. The first member W1 and the second member W2 are arranged to abut on each other.

The position where the first member W1 and the second member W2 abut on each other is a boundary position Wb between the first member W1 and the second member W2. The arc welding device 1 conducts welding by moving the welding torch 11 in a spiral weaving motion in which the welding torch 11 crosses the boundary position Wb between the first member W1 and the second member W2 alternately multiple times.

The spiral weaving motion is a motion of the welding torch 11 along a spiral trajectory, in which the welding torch 11 is moved in the direction of welding while making circular trajectories.

In the example shown in FIG. 6, the welding wire 15 fed by the welding torch 11 moves in a circular motion in which the welding wire 15 circles about the center RC of rotation that moves in the direction of welding on the boundary position Wb between the first member W1 and the second member W2, while keeping a distance from the center RC of rotation by a radius r of rotation and at a predetermined rotation frequency. The size of the radius r of rotation shown in FIG. 6 is merely an example and not limited thereto. For example, in FIGS. 5 and 6, the welding torch 11 may be moved to a position where the welding wire 15 can be fed to the upper surface of the second member W2.

The arc welding device 1 changes the welding motion during the spiral weaving motion so that the first member W1 is subjected to the first welding and that the second member W2 is subjected to the second welding. The first welding includes at least the short-circuit welding whose heat input is low. The second welding includes at least the pulse welding whose heat input is high. Third welding is performed in at least one of the first welding or the second welding. The third welding is pulse mix welding in which the short-circuit welding and the pulse welding are alternately repeated multiple times, each at given number of times.

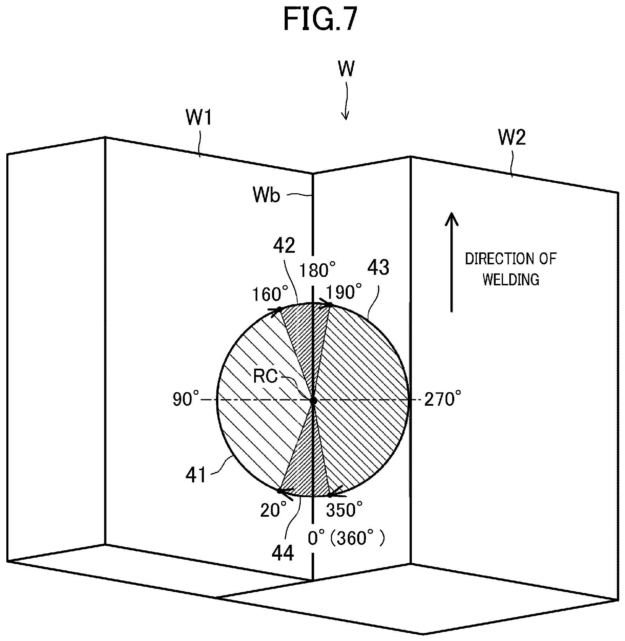

Now, the timing of switching the welding mode among the short-circuit welding, the pulse welding, and the pulse mix welding will be described with reference to FIG. 7.

As shown in FIG. 7, the start position of the arc welding on the boundary position Wb between the first member W1 and the second member W2 is referred to as 0°, and the arc welding is performed in the direction of welding, while rotating the welding torch clockwise about the center RC of rotation.

In FIG. 7, the section between 20° and 160° is referred to as a first section 41, the section between 160° and 190° as a second section 42, the section between 190° and 350° as a third section 43, and the section between 350° and 20° as a fourth section 44. The angle range of each section is merely an example.

In the first section 41, the first switcher 38 selects an output of the short-circuit welding controller 33 suitable for the first member W1 with a smaller heat capacity, thereby performing the short-circuit welding, in the first welding for welding the first member W1.

In the first section 41, the first switcher 38 may select an output of the pulse mix welding controller 34 after the start of the short-circuit welding to perform the pulse mix welding. The pulse mix welding is the third welding in which the pulse welding period Tp for the pulse welding and the short-circuit welding period Ts for the short-circuit welding are alternately repeated multiple times. The pulse mix welding has characteristics in the middle of those of the short-circuit welding and the pulse welding, with a higher heat input compared to the short-circuit welding and lower heat input compared to the pulse welding. The pulse mix welding can reduce a rapid change in the heat input at the time when the welding current is changed.

In performing the pulse mix welding in the first welding, the controller 30 controls the operation of the welding unit 10 so that the ratio of the short-circuit welding period Ts for the short-circuit welding is higher than the ratio of the pulse welding period Tp for the pulse welding in the pulse mix welding. This makes it possible to conduct the pulse mix welding under proper conditions. The first welding may be controlled to perform only the short-circuit welding, but no pulse mix welding. In the pulse mix welding, the number of pulses during the pulse welding and/or the number of short circuits during the short-circuit welding may be gradually changed.

The second section 42 is an area across the first member W1 and the second member W2. In the second section 42, the welding motion is changed so that the first member W1 is subjected to the first welding including at least the short-circuit welding and that the second member W2 is subjected to the second welding including at least the pulse welding.

Specifically, the first switcher 38 selects an output of the pulse mix welding controller 34 to perform pulse mix welding as the third welding in which the pulse welding period Tp for the pulse welding and the short-circuit welding period Ts for the short-circuit welding are alternately repeated multiple times. The pulse mix welding can reduce a rapid change in the heat input at the time when the welding current is changed.

In performing the pulse mix welding in the first welding for the first member W1, the controller 30 controls the operation of the welding unit 10 so that the ratio of the short-circuit welding period Ts for the short-circuit welding is higher than the ratio of the pulse welding period Tp for the pulse welding in the pulse mix welding. In performing the pulse mix welding in the second welding for the second member W2, the controller 30 controls the operation of the welding unit 10 so that the ratio of the short-circuit welding period Ts for the short-circuit welding is lower than the ratio of the pulse welding period Tp for the pulse welding in the pulse mix welding.

In other words, when the pulse mix welding is performed on the first member W1, the ratio of the short-circuit welding period Ts for the short-circuit welding during the pulse mix welding is set to be higher than when the pulse mix welding is performed on the second member W2. On the other hand, when the pulse mix welding is performed on the second member W2, the ratio of the short-circuit welding period Ts for the short-circuit welding during the pulse mix welding is set to be lower than when the pulse mix welding is performed on the first member W1.

That is, in the pulse mix welding, it is possible to increase the ratio of the short-circuit welding period for the short-circuit welding, whose heat input amount is small, when the first member W1 with the smaller heat capacity is the area to be welded; on the other hand, it is possible to increase the ratio of the pulse welding period for the pulse welding, whose heat input amount is large as compared to the short-circuit welding, when the second member W2 with the larger heat capacity than the first member W1 is the area to be welded. Accordingly, the pulse mix welding can be performed under proper conditions.

The first welding may be controlled to perform only the short-circuit welding, but no pulse mix welding. In the pulse mix welding, the number of pulses during the pulse welding and/or the number of short circuits during the short-circuit welding may be gradually changed.

In the second section 42, the controller 30 controls the welding unit 10 to increase the amount of welding current to be applied to the welding wire 15 before the welding torch 11 moving from the first member W1 toward the second member W2 crosses the boundary position Wb. In other words, the welding current applied when the welding torch 11 crosses the boundary position Wb from the first member W1 toward the second member W2 is larger than the welding current applied before the welding torch 11 crosses the boundary position Wb. Specifically, the average welding current (also referred to as a "set current"), which is an average current as the moving average of the welding current applied when the welding torch 11 crosses the boundary position Wb from the first member W1 toward the second member W2 is larger than the average welding current applied before the welding torch 11 crosses the boundary position Wb. Accordingly, in the second section 42, a welding current larger than the welding current applied to the welding wire 15 in the first section 41 is applied to the welding wire 15.

The average welding current and the amount of feeding of the welding wire 15 are correlated with each other. Thus, the second section 42, which is the area of the step height between the first member W1 and the second member W2 including the boundary position Wb, may be welded with an increased amount of feeding of the welding wire 15 as compared to the first section 41 and the third section 43 to secure the amount of welding.

In this manner, it is possible to increase the amount of feeding of the welding wire 15 and secure a sufficient thickness of the beads in the boundary position Wb by increasing the current value of the current to be applied to the welding wire 15 when the welding torch 11 moving from the first member W1 with the smaller heat capacity toward the second member W2 with the larger heat capacity crosses the boundary position Wb. It is thus possible to fill the step height at the boundary between the thinner plate with the smaller heat capacity and the thicker plate with the larger heat capacity.

In the third section 43, the first switcher 38 selects an output of the pulse welding controller 32 suitable for the second member W2 with a larger heat capacity, thereby performing the pulse welding, in the second welding for welding the second member W2.

In the third section 43, after the start of the pulse welding, the first switcher 38 may select an output of the pulse mix welding controller 34 to perform pulse mix welding as the third welding in which the pulse welding period Tp for the pulse welding and the short-circuit welding period Ts for the short-circuit welding are alternately repeated multiple times. The pulse mix welding can reduce a rapid change in the heat input at the time when the welding current is changed.

In performing the pulse mix welding in the second welding for the second member W2, the controller 30 controls the operation of the welding unit 10 so that the ratio of the pulse welding period Tp for the pulse welding is higher than the ratio of the short-circuit welding period Ts for the short-circuit welding in the pulse mix welding. This makes it possible to conduct the pulse mix welding under proper conditions. The second welding may be controlled to perform only the pulse welding, but no pulse mix welding. In the pulse mix welding, the ratio of the pulse welding period Tp for the pulse welding or the number of pulses during the pulse welding, and/or the ratio of the short-circuit welding period Ts for the short-circuit welding or the number of short circuits during the short-circuit welding may be gradually changed.

The fourth section 44 is an area across the first member W1 and the second member W2. In the fourth section 44, the welding motion is changed so that the first member W1 is subjected to the first welding including at least the short-circuit welding and that the second member W2 is subjected to the second welding including at least the pulse welding.

Specifically, the first switcher 38 selects an output of the pulse mix welding controller 34 to perform pulse mix welding as the third welding in which the pulse welding period Tp for the pulse welding and the short-circuit welding period Ts for the short-circuit welding are alternately repeated multiple times. The pulse mix welding can reduce a rapid change in the heat input at the time when the welding current is changed.

In performing the pulse mix welding in the first welding for the first member W1, the controller 30 controls the operation of the welding unit 10 so that the ratio of the short-circuit welding period Ts for the short-circuit welding is higher than the ratio of the pulse welding period Tp for the pulse welding in the pulse mix welding. In performing the pulse mix welding in the second welding for the second member W2, the controller 30 controls the operation of the welding unit 10 so that the ratio of the short-circuit welding period Ts for the short-circuit welding is lower than the ratio of the pulse welding period Tp for the pulse welding in the pulse mix welding.

In other words, when the pulse mix welding is performed on the first member W1, the ratio of the short-circuit welding period Ts for the short-circuit welding during the pulse mix welding is set to be higher than when the pulse mix welding is performed on the second member W2. On the other hand, when the pulse mix welding is performed on the second member W2, the ratio of the short-circuit welding period Ts for the short-circuit welding during the pulse mix welding is set to be lower than when the pulse mix welding is performed on the first member W1.

That is, in the pulse mix welding, it is possible to increase the ratio of the short-circuit welding period for the short-circuit welding, whose heat input amount is small, when the second member W1 with the smaller heat capacity is the area to be welded; on the other hand, it is possible to increase the ratio of the pulse welding period for the pulse welding, whose heat input amount is large as compared to the short-circuit welding, when the second member W2 with the larger heat capacity than the first member W1 is the area to be welded. Accordingly, the pulse mix welding can be performed under proper conditions.

The first welding may be controlled to perform only the short-circuit welding, but no pulse mix welding. In the pulse mix welding, the number of pulses during the pulse welding and/or the number of short circuits during the short-circuit welding may be gradually changed.

Accordingly, the pulse welding, the pulse mix welding, and the short-circuit welding are performed in coordination with each other, making it possible to reduce a rapid change in the heat input.

Further, in the fourth section 44, the ratio of the short-circuit welding period Ts for the short-circuit welding, whose heat input is low as compared to the pulse welding, is gradually increased in the pulse mix welding, before the welding torch 11 crosses the boundary position Wb between the first member W1 and the second member W2 from the second member W2 with the larger heat capacity toward the first member W1 with the smaller heat capacity. In other words, the ratio of the number of short circuits in the short-circuit welding in the pulse mix welding at the time when the welding torch 11 crosses the boundary position Wb is larger than the ratio of the number of short circuits in the short-circuit welding in the pulse mix welding before the welding torch 11 crosses the boundary position Wb.

In this manner, the ratio of the number of short circuits at the time when the welding torch 11 crosses the boundary position Wb is set to be larger than the ratio of the number of short circuits before the welding torch 11 crosses the boundary position Wb, so that the ratio of the number of short circuits is increased from before and when the welding torch 11 crosses the boundary position Wb. This makes it possible to secure a sufficient thickness of the beads at the boundary position Wb in the state of low heat input. It is thus possible to fill the step height at the boundary between the thinner plate with the smaller heat capacity and the thicker plate with the larger heat capacity.

The heat input is lower in the short-circuit welding than in the pulse welding. In the pulse mix welding in which the short-circuit welding period Ts for the short-circuit welding and the pulse welding period Tp for the pulse welding are alternately repeated multiple times at a predetermined ratio, the short-circuit welding period Ts has a cooling effect since the heat input is low in the short-circuit welding. The heat input to the first member W1 is therefore reduced, which makes it possible to reduce the burn-through. In the pulse welding period Tp, the arc 16 spreads and increases the width of the beads, and the droplets of the welding wire 15 are regularly separated and transferred to the beads formed by the pulse welding with the high heat input. Spatter is thus reduced.

The pulse mix welding during the spiral weaving motion can increase the welding speed without degrading the quality of welding due to burn-through or other causes.

Specifically, it is believed that in the pulse mix welding in the spiral weaving motion, the scaly pattern of the beads are easily formed because the weld pool formed by the pulse welding with a high heat input is cooled by the short-circuit welding with a low heat input in the spiral weaving motion. This can increase the welding speed, while ensuring the quality of welding.

As described above, the arc welding method using the arc welding device 1 according to this embodiment can improve the quality of joining members with different heat capacities. Specifically, it is possible to reduce the burn-through of the first member W1 by performing, on the first member W1 with a smaller heat capacity, at least short-circuit welding and performing mainly the short-circuit welding whose heat input is low as compared to pulse welding, in other words, by increasing the ratio of the short-circuit welding period Ts for the short-circuit welding whose heat input is low. It is also possible to reduce insufficient penetration by performing, on the second member W2 with a larger heat capacity, at least pulse welding and performing mainly the pulse welding whose heat input is high, in other words, by increasing the ratio of the pulse welding period Tp for the pulse welding whose heat input is high.

According to the arc welding method using the arc welding device 1 of the present embodiment, even if the welding target W has a difference in thickness at many welding points, the short-circuit welding, the pulse welding, and the pulse mix welding can be set for the welding target W that consists of a combination of members with different heat capacities, in accordance with the welding parameters (such as the welding current I, the welding voltage V, the feeding speed of the welding wire 15, and the thickness of the welding target W) related to the heat input to the welding target W, by adjusting the welding conditions. This enables welding with high productivity and high quality with less spatter and less burn-through or the like at the welding points of the welding target W.

### - Variation of Embodiment -

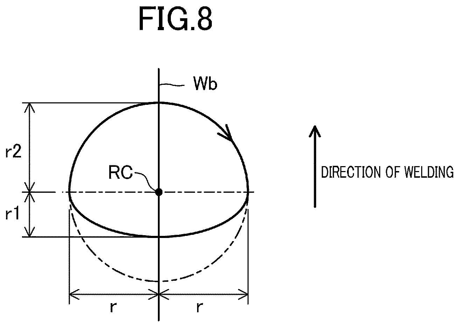

As shown in FIG. 8, the arc welding device 1 performs welding, with the welding torch 11 moving in the spiral weaving motion along the direction of welding. In the example shown in FIG. 8, the welding wire 15 fed by the welding torch 11 moves in a circular motion in which the welding wire 15 circles about the center RC of rotation that moves on the boundary position Wb between the first member W1 and the second member W2, while keeping a distance from the center RC of rotation by a radius r of rotation and at a predetermined rotation frequency.

In the example shown in FIG. 8, the welding torch 11 does not move along the circular trajectory. The distance r1 from the center RC of rotation of the spiral trajectory to the rear end of the spiral trajectory in the direction of welding is set to be shorter than the distance r2 to the front end of the spiral trajectory in the direction of welding. This reduces the area where the arc 16 is formed at the rear in the direction of welding, which reduces the penetration and can secure a sufficient thickness of the beads.

In the example shown in FIG. 8, the distance r2 to the front end of the spiral trajectory in the direction of welding is set to be equal to the radius r of rotation, and the distance r1 to the rear end of the spiral trajectory in the direction of welding is set to be shorter than the distance r2. The distances are not limited thereto. For example, the distance r1 may be set to be equal to the radius r of rotation, and the distance r2 may be set to be longer than the distance r1.

### «Other Embodiments»

The embodiment described above may be modified as follows.

In this embodiment, the second member W2 has a greater plate thickness than the first member W1 to have a different heat capacity. For example, the first member W1 and the second member W2 may be made of different materials to have different heat capacities. For example, the first member W1 may be made of aluminum and the second member W2 may be made of a mild steel material, while having the same thickness. As a result, the first member W1 and the second member W2 have different heat capacities: the first member W1 has a smaller heat capacity and the second member W2 has a larger heat capacity. In other words, the second member W2 has a relatively larger heat capacity than the first member W1.

In this embodiment, the arc welding is performed on the first member W1 and the second member W2 abutting on each other. The welding is however not limited thereto. For example, the first member W1 and the second member W2 may be overlapped with each other in the thickness direction, and the edges of the first member W1 and the second member W2 may be arc-welded.

Here, for example, if the first member W1 and the second member W2 have the same plate thicknesses, the overlapping area of the first member W1 and the second member W2 has a larger heat capacity than the non-overlapping area. That is, the overlapping area of the two plate materials is assumed to be the second member, and the non-overlapping area as the first member, and the welding mode may be switched among the short-circuit welding, the pulse welding, and the pulse mix welding as in this embodiment.

In this embodiment, the pulse mix welding is performed in the first welding and the second welding. The welding is not limited thereto. For example, the first welding may be short-circuit welding, and the second welding may be pulse welding. The first welding may be short-circuit welding, and the second welding may be pulse mix welding. The first welding may be pulse mix welding, and the second welding may be pulse welding.

In this embodiment, the welding torch 11 moves in the spiral weaving motion. The motion is however not limited thereto. For example, the welding torch 11 may move in a weaving motion in which the welding torch 11 moves in the advance direction of the welding while swinging periodically side to side with respect to the boundary position Wb between the first member W1 and the second member W2 so as to cross the boundary position Wb alternately multiple times; and the welding torch 11 may move in a zigzag weaving motion. In this case, the weaving motion is preferably a motion in which the welding torch 11 swings periodically side to side with respect to the boundary position Wb with small swings at an acute angle.

In this embodiment, the spiral trajectory in the spiral weaving motion has the same radius r on the first member W1 side and on the second member W2 side, but may have different radii.

In this embodiment, the forward movement and the backward movement of the welding wire 15 are periodically repeated to feed the welding wire 15. The feeding is however not limited thereto. For example, the welding wire 15 may be fed at a constant speed.

During the weaving motion of this embodiment, a ratio of the pulse welding may be set to be higher on the side forward of the center position of the spiral trajectory in the direction of welding, and a ratio of the short-circuit welding may be set to be higher on the side rearward in the direction of welding. In this manner, the weld pool is formed at the front in the direction of welding by increasing the ratio of the pulse welding whose heat input is high, and the weld pool is cooled at the rear in the direction of welding by increasing the ratio of the short-circuit welding whose heat input is low. It is thus possible to reduce burn-through of the welding target W and make the scaly wave pattern of the beads clear.

In this embodiment, the arc welding method including the DC short-circuit welding and the AC pulse welding in combination has been described. The method is however not limited thereto. For example, the arc welding method may include AC short-circuit welding and AC pulse welding in combination. Alternatively, the arc welding method may include AC short-circuit welding and DC pulse welding in combination.

In the case of a constant wire feeding amount, the heat input to the welding target W is the smallest in the AC short-circuit welding (forward-backward wire feeding) and increases in the order of the AC short-circuit welding (constant wire feeding), the DC short-circuit welding (forward-backward wire feeding), the DC short-circuit welding (constant wire feeding), the AC pulse welding, and the DC pulse welding.

Here, the AC short-circuit welding as the AC welding has a smaller heat input amount than the DC short-circuit welding as the DC welding. When the welding is simply referred to as "short-circuit welding" or "pulse welding," the welding represents the DC short-circuit welding or the DC pulse welding as the DC welding, respectively. The DC welding in the above description has been described as welding in which the reverse polarity (i.e., the reverse polarity period), where the welding wire 15 serves as a positive electrode and the welding target W as a negative electrode, continues. The DC welding is not limited thereto. Depending on the situation, the straight polarity (i.e., the straight polarity period) in which the welding wire 15 serves as a negative electrode and the welding target W as a positive electrode may continue. Since the straight polarity continues, the amount of heat input to the welding target W is reduced, and a larger amount of the welding wire 15 melts, resulting in an increase in the amount of welding.

Thus, by switching the welding mode in synchronization with the weaving motion of the welding torch, a proper heat can be input in welding a welding target having different plate thicknesses or a welding target in a complicated shape.

### INDUSTRIAL APPLICABILITY

As described above, the present invention can improve the quality of joining members with different heat capacities, which is very practical and useful and therefore highly applicable in the industry.

### DESCRIPTION OF REFERENCE CHARACTERS

- 1: Arc Welding Device
- 10: Welding Unit
- 11: Welding Torch
- 13: Robot
- 15: Welding Wire
- 30: Controller
- 32: Pulse Welding Controller
- 33: Short-Circuit Welding Controller
- 34: Pulse Mix Welding Controller
- 40: Robot Controller
- W: Welding Target
- W1: First Member
- W2: Second Member
- Wb: Boundary Position

## Claims

1. An arc welding method of welding by feeding, toward a welding target (W), a welding wire (15) that is a consumable electrode, and generating an arc between the welding wire (15) and the welding target (W),
the welding target (W) including a first member (W1) and a second member (W2) having a heat capacity larger than a heat capacity of the first member (W1), the method comprising:
conducting welding while moving a welding torch (11) in a weaving motion so that the welding torch (11) crosses a boundary position between the first member (W1) and the second member (W2) alternately multiple times; and
switching a welding motion so that, during the weaving motion, the first member (W1) is subjected to first welding and the second member (W2) is subjected to second welding,
the first welding including at least short-circuit welding,
the second welding including at least pulse welding,
in at least one of the first welding or the second welding, an AC welding current being made to flow through the welding wire (15) and the welding target (W) so that a reverse polarity period in which the welding wire (15) serves as a positive electrode and the welding target (W) as a negative electrode, and a straight polarity period in which the welding wire (15) serves as a negative electrode and the welding target (W) as a positive electrode, are alternately repeated multiple times, wherein
at least one of the first welding or the second welding includes third welding in which a short-circuit welding period for the short-circuit welding and a pulse welding period for the pulse welding are switched from one to the other multiple times.

2. The arc welding method of claim 1, further comprising:
if the third welding is conducted in the first welding, setting a ratio of the short-circuit welding period for the short-circuit welding in the third welding to be higher than a ratio of the pulse welding period for the pulse welding; and
if the third welding is conducted in the second welding, setting the ratio of the pulse welding period for the pulse welding in the third welding to be higher than the ratio of the short-circuit welding period for the short-circuit welding.

3. The arc welding method of claim 1 or 2, further comprising:
switching welding in order of the pulse welding, the third welding, and the short-circuit welding before the welding torch (11) crosses the boundary position from the second member (W2) toward the first member (W1) in the second welding.

4. The arc welding method of any one of claims 1 to 3, further comprising:
gradually changing, in the third welding, at least one of the number of pulses in the pulse welding or the number of short circuits in the short-circuit welding.

5. The arc welding method of any one of claims 1 to 4, wherein
a welding current applied when the welding torch (11) crosses the boundary position from the first member (W1) toward the second member (W2) is larger than a welding current before the welding torch (11) crosses the boundary position.

6. The arc welding method of any one of claims 1 to 5, wherein
a ratio of the number of short circuits of the short-circuit welding in the third welding when the welding torch (11) crosses the boundary position from the second member (W2) toward the first member (W1) is higher than the ratio of the number of short circuits of the short-circuit welding in the third welding before the welding torch (11) crosses the boundary position.

7. The arc welding method of any one of claims 1 to 6, wherein
the weaving motion is a spiral weaving motion moving along a spiral trajectory, and
a distance from a center position of the spiral trajectory to a rear end of the spiral trajectory in a direction of welding on the boundary position is shorter than a distance to a front end of the spiral trajectory in the direction of welding.

8. The arc welding method of any one of claims 1 to 7, wherein
in at least one of the first welding or the second welding, the welding wire (15) is fed at a constant speed.

9. The arc welding method of any one of claims 1 to 7, wherein
in at least one of the first welding or the second welding, the welding wire (15) is fed while a forward movement and a backward movement of the welding wire (15) are alternately repeated periodically.

10. The arc welding method of any one of claims 1 to 9, wherein
the weaving motion is a spiral weaving motion moving along a spiral trajectory, and the third welding of switching between the short-circuit welding period for the short-circuit welding and the pulse welding period for the pulse welding multiple times is performed in the spiral weaving motion, and
a ratio of the pulse welding period is set to be higher on a side forward of the center position of the spiral trajectory in the direction of welding, while a ratio of the short-circuit welding period is set to be higher on a side rearward in the direction of welding.

11. An arc welding device (1) for welding by feeding, toward a welding target (W), a welding wire (15) that is a consumable electrode, and generating an arc between the welding wire (15) and the welding target (W),
the welding target (W) including a first member (W1) and a second member (W2), wherein the first member (W1) and the second member (W2) are arranged during welding to abut on each other at a boundary position (Wb) between the first member (W1) and the second member (W2), the device comprising:
a welding unit (10) configured to conduct welding while moving a welding torch (11) in a weaving motion so that the welding torch (11) crosses the boundary position between the first member (W1) and the second member (W2) alternately multiple times; and
a controller (30) configured to control an operation of the welding unit (10),
the controller (30) being configured to control the operation of the welding unit (10) so that, during the weaving motion, the first member (W1) is subjected to first welding and the second member (W2) is subjected to second welding,
the first welding including at least short-circuit welding,
the second welding including at least pulse welding,
in at least one of the first welding or the second welding, an AC welding current being made to flow through the welding wire (15) and the welding target (W) so that a reverse polarity period in which the welding wire (15) serves as a positive electrode and the welding target (W) as a negative electrode, and a straight polarity period in which the welding wire (15) serves as a negative electrode and the welding target (W) as a positive electrode, are alternately repeated multiple times,
**characterized in that** at least one of the first welding or the second welding includes third welding in which a short-circuit welding period for the short-circuit welding and a pulse welding period for the pulse welding are switched from one to the other multiple times.

## Patentansprüche

1. Lichtbogenschweißverfahren zum Schweißen durch Zuführen, zu einem Schweißziel (W), eines Schweißdrahtes (15), der eine abschmelzende Elektrode ist, und durch Erzeugen eines Lichtbogens zwischen dem Schweißdraht (15) und dem Schweißziel (W),
wobei das Schweißziel (W) ein erstes Element (W1) und ein zweites Element (W2) umfasst, das eine Wärmekapazität aufweist, die größer als eine Wärmekapazität des ersten Elements (W1) ist, wobei das Verfahren umfasst:
Durchführen des Schweißens, während ein Schweißbrenner (11) in einer Pendelbewegung bewegt wird, so dass der Schweißbrenner (11) eine Grenzposition zwischen dem ersten Element (W1) und dem zweiten Element (W2) abwechselnd mehrmals überquert; und
Umschalten einer Schweißbewegung, so dass während der Pendelbewegung das erste Element (W1) einem ersten Schweißen und das zweite Element (W2) einem zweiten Schweißen unterzogen wird,
wobei das erste Schweißen mindestens ein Kurzschlussschweißen umfasst,
wobei das zweite Schweißen mindestens ein Impulsschweißen umfasst,
wobei in mindestens einem von dem ersten Schweißen oder dem zweiten Schweißen ein Wechselstrom-Schweißstrom dazu gebracht wird, durch den Schweißdraht (15) und das Schweißziel (W) zu fließen, so dass eine Umkehrpolaritätsperiode, in der der Schweißdraht (15) als positive Elektrode und das Schweißziel (W) als negative Elektrode dient, und eine Gleichpolaritätsperiode, in der der Schweißdraht (15) als negative Elektrode und das Schweißziel (W) als positive Elektrode dient, abwechselnd mehrmals wiederholt werden, wobei
mindestens eines von dem ersten Schweißen oder dem zweiten Schweißen ein drittes Schweißen umfasst, bei dem eine Kurzschlussschweißperiode für das Kurzschlussschweißen und eine Impulsschweißperiode für das Impulsschweißen mehrmals von einer zur anderen umgeschaltet werden.

2. Lichtbogenschweißverfahren nach Anspruch 1, ferner umfassend:
wenn das dritte Schweißen in dem ersten Schweißen durchgeführt wird, Einstellen eines Verhältnisses der Kurzschlussschweißperiode für das Kurzschlussschweißen in dem dritten Schweißen, so dass es höher ist als ein Verhältnis der Impulsschweißperiode für das Impulsschweißen; und
wenn das dritte Schweißen in dem zweiten Schweißen durchgeführt wird, Einstellen des Verhältnisses der Impulsschweißperiode für das Impulsschweißen in dem dritten Schweißen, so dass es höher ist als das Verhältnis der Kurzschlussschweißperiode für das Kurzschlussschweißen.

3. Lichtbogenschweißverfahren nach Anspruch 1 oder 2, ferner umfassend:
Umschalten des Schweißens in der Reihenfolge von dem Impulsschweißen, dem dritten Schweißen und dem Kurzschlussschweißen, bevor der Schweißbrenner (11) die Grenzposition von dem zweiten Element (W2) zum ersten Element (W1) in dem zweiten Schweißen überquert.

4. Lichtbogenschweißverfahren nach einem der Ansprüche 1 bis 3, ferner umfassend:
allmähliches Ändern, in dem dritten Schweißen, von mindestens einem von der Anzahl der Impulse in dem Impulsschweißen oder der Anzahl der Kurzschlüsse in dem Kurzschlussschweißen.

5. Lichtbogenschweißverfahren nach einem der Ansprüche 1 bis 4, wobei
ein Schweißstrom, der angelegt wird, wenn der Schweißbrenner (11) die Grenzposition von dem ersten Element (W1) zum zweiten Element (W2) überquert, größer ist als ein Schweißstrom, bevor der Schweißbrenner (11) die Grenzposition überquert.

6. Lichtbogenschweißverfahren nach einem der Ansprüche 1 bis 5, wobei
ein Verhältnis der Anzahl der Kurzschlüsse des Kurzschlussschweißens in dem dritten Schweißen, wenn der Schweißbrenner (11) die Grenzposition von dem zweiten Element (W2) zum ersten Element (W1) überquert, höher ist als das Verhältnis der Anzahl der Kurzschlüsse des Kurzschlussschweißens in dem dritten Schweißen, bevor der Schweißbrenner (11) die Grenzposition überquert.

7. Lichtbogenschweißverfahren nach einem der Ansprüche 1 bis 6, wobei
die Pendelbewegung eine spiralförmige Pendelbewegung ist, die sich entlang einer Spiralbahn bewegt, und
ein Abstand von einer Mittelposition der Spiralbahn zu einem hinteren Ende der Spiralbahn in einer Schweißrichtung an der Grenzposition kürzer ist als ein Abstand zu einem vorderen Ende der Spiralbahn in der Schweißrichtung.

8. Lichtbogenschweißverfahren nach einem der Ansprüche 1 bis 7, wobei
in mindestens einem von dem ersten Schweißen oder dem zweiten Schweißen der Schweißdraht (15) mit einer konstanten Geschwindigkeit zugeführt wird.

9. Lichtbogenschweißverfahren nach einem der Ansprüche 1 bis 7, wobei
in mindestens einem von dem ersten Schweißen oder dem zweiten Schweißen der Schweißdraht (15) zugeführt wird, während eine Vorwärtsbewegung und eine Rückwärtsbewegung des Schweißdrahtes (15) abwechselnd periodisch wiederholt werden.

10. Lichtbogenschweißverfahren nach einem der Ansprüche 1 bis 9, wobei
die Pendelbewegung eine spiralförmige Pendelbewegung ist, die sich entlang einer Spiralbahn bewegt, und
das dritte Schweißen des Umschaltens zwischen der Kurzschlussschweißperiode für das Kurzschlussschweißen und der Impulsschweißperiode für das Impulsschweißen mehrmals in der spiralförmigen Pendelbewegung durchgeführt wird, und
ein Verhältnis der Impulsschweißperiode so eingestellt wird, dass es auf einer Seite vor der Mittelposition der Spiralbahn in der Schweißrichtung höher ist, während ein Verhältnis der Kurzschlussschweißperiode so eingestellt wird, dass es auf einer Seite hinter der Mittelposition in der Schweißrichtung höher ist.

11. Lichtbogenschweißvorrichtung (1) zum Schweißen durch Zuführen, zu einem Schweißziel (W), eines Schweißdrahtes (15), der eine abschmelzende Elektrode ist, und durch Erzeugen eines Lichtbogens zwischen dem Schweißdraht (15) und dem Schweißziel (W),
wobei das Schweißziel (W) ein erstes Element (W1) und ein zweites Element (W2) umfasst,
wobei das erste Element (W1) und das zweite Element (W2) während des Schweißens so angeordnet sind, dass sie an einer Grenzposition (Wb) zwischen dem ersten Element (W1) und dem zweiten Element (W2) aneinander anstoßen, wobei die Vorrichtung umfasst:
eine Schweißeinheit (10), die konfiguriert ist, das Schweißen durchzuführen, während ein Schweißbrenner (11) in einer Pendelbewegung bewegt wird, so dass der Schweißbrenner (11) die Grenzposition zwischen dem ersten Element (W1) und dem zweiten Element (W2) abwechselnd mehrmals überquert; und
eine Steuerung (30), die konfiguriert ist, einen Betrieb der Schweißeinheit (10) zu steuern,
wobei die Steuerung (30) konfiguriert ist, den Betrieb der Schweißeinheit (10) so zu steuern, dass während der Pendelbewegung das erste Element (W1) einem ersten Schweißen und das zweite Element (W2) einem zweiten Schweißen unterzogen wird,
wobei das erste Schweißen mindestens ein Kurzschlussschweißen umfasst,
wobei das zweite Schweißen mindestens ein Impulsschweißen umfasst,
wobei in mindestens einem von dem ersten Schweißen oder dem zweiten Schweißen ein Wechselstrom-Schweißstrom dazu gebracht wird, durch den Schweißdraht (15) und das Schweißziel (W) zu fließen, so dass eine Umkehrpolaritätsperiode, in der der Schweißdraht (15) als positive Elektrode und das Schweißziel (W) als negative Elektrode dient, und eine Gleichpolaritätsperiode, in der der Schweißdraht (15) als negative Elektrode und das Schweißziel (W) als positive Elektrode dient, abwechselnd mehrmals wiederholt werden,
**dadurch gekennzeichnet, dass** mindestens eines von dem ersten Schweißen oder dem zweiten Schweißen ein drittes Schweißen umfasst, bei dem eine Kurzschlussschweißperiode für das Kurzschlussschweißen und eine Impulsschweißperiode für das Impulsschweißen mehrmals von einer zur anderen umgeschaltet werden.

## Revendications

1. Procédé de soudage à l'arc consistant à souder en alimentant, vers une cible de soudage (W), un fil de soudage (15) qui est une électrode consommable, et en générant un arc entre le fil de soudage (15) et la cible de soudage (W),
la cible de soudage (W) comprenant un premier élément (W1) et un deuxième élément (W2) ayant une capacité thermique supérieure à une capacité thermique du premier élément (W1), le procédé comprenant :
la conduite du soudage tout en déplaçant une torche de soudage (11) dans un mouvement de tissage de sorte que la torche de soudage (11) traverse une position de frontière entre le premier élément (W1) et le deuxième élément (W2) alternativement plusieurs fois ; et
la commutation d'un mouvement de soudage de sorte que, pendant le mouvement de tissage, le premier élément (W1) est soumis à un premier soudage et le deuxième élément (W2) est soumis à un deuxième soudage,
le premier soudage comprenant au moins un soudage par court-circuit,
le deuxième soudage comprenant au moins un soudage par impulsions,
dans au moins l'un du premier soudage ou du deuxième soudage, un courant de soudage en courant alternatif étant amené à circuler à travers le fil de soudage (15) et la cible de soudage (W) de sorte qu'une période de polarité inverse dans laquelle le fil de soudage (15) sert d'électrode positive et la cible de soudage (W) d'électrode négative, et une période de polarité directe dans laquelle le fil de soudage (15) sert d'électrode négative et la cible de soudage (W) d'électrode positive, sont alternativement répétées plusieurs fois, dans lequel
au moins l'un du premier soudage ou du deuxième soudage comprend un troisième soudage dans lequel une période de soudage par court-circuit pour le soudage par court-circuit et une période de soudage par impulsions pour le soudage par impulsions sont commutées de l'une à l'autre plusieurs fois.

2. Procédé de soudage à l'arc selon la revendication 1, comprenant en outre :
si le troisième soudage est conduit dans le premier soudage, le réglage d'un rapport de la période de soudage par court-circuit pour le soudage par court-circuit dans le troisième soudage pour qu'il soit supérieur à un rapport de la période de soudage par impulsions pour le soudage par impulsions ; et
si le troisième soudage est conduit dans le deuxième soudage, le réglage du rapport de la période de soudage par impulsions pour le soudage par impulsions dans le troisième soudage pour qu'il soit supérieur au rapport de la période de soudage par court-circuit pour le soudage par court-circuit.

3. Procédé de soudage à l'arc selon la revendication 1 ou 2, comprenant en outre :
la commutation du soudage dans l'ordre du soudage par impulsions, du troisième soudage et du soudage par court-circuit avant que la torche de soudage (11) ne traverse la position de frontière du deuxième élément (W2) vers le premier élément (W1) dans le deuxième soudage.

4. Procédé de soudage à l'arc selon l'une quelconque des revendications 1 à 3, comprenant en outre :
le changement progressif, dans le troisième soudage, d'au moins l'un du nombre d'impulsions dans le soudage par impulsions ou du nombre de courts-circuits dans le soudage par court-circuit.

5. Procédé de soudage à l'arc selon l'une quelconque des revendications 1 à 4, dans lequel
un courant de soudage appliqué lorsque la torche de soudage (11) traverse la position de frontière du premier élément (W1) vers le deuxième élément (W2) est supérieur à un courant de soudage avant que la torche de soudage (11) ne traverse la position de frontière.

6. Procédé de soudage à l'arc selon l'une quelconque des revendications 1 à 5, dans lequel
un rapport du nombre de courts-circuits du soudage par court-circuit dans le troisième soudage lorsque la torche de soudage (11) traverse la position de frontière du deuxième élément (W2) vers le premier élément (W1) est supérieur au rapport du nombre de courts-circuits du soudage par court-circuit dans le troisième soudage avant que la torche de soudage (11) ne traverse la position de frontière.

7. Procédé de soudage à l'arc selon l'une quelconque des revendications 1 à 6, dans lequel
le mouvement de tissage est un mouvement de tissage en spirale se déplaçant le long d'une trajectoire en spirale, et
une distance d'une position centrale de la trajectoire en spirale à une extrémité arrière de la trajectoire en spirale dans une direction de soudage sur la position de frontière est plus courte qu'une distance à une extrémité avant de la trajectoire en spirale dans la direction de soudage.

8. Procédé de soudage à l'arc selon l'une quelconque des revendications 1 à 7, dans lequel
dans au moins l'un du premier soudage ou du deuxième soudage, le fil de soudage (15) est alimenté à une vitesse constante.

9. Procédé de soudage à l'arc selon l'une quelconque des revendications 1 à 7, dans lequel
dans au moins l'un du premier soudage ou du deuxième soudage, le fil de soudage (15) est alimenté tandis qu'un mouvement vers l'avant et un mouvement vers l'arrière du fil de soudage (15) sont alternativement répétés périodiquement.

10. Procédé de soudage à l'arc selon l'une quelconque des revendications 1 à 9, dans lequel
le mouvement de tissage est un mouvement de tissage en spirale se déplaçant le long d'une trajectoire en spirale, et
le troisième soudage de commutation entre la période de soudage par court-circuit pour le soudage par court-circuit et la période de soudage par impulsions pour le soudage par impulsions plusieurs fois est effectué dans le mouvement de tissage en spirale, et
un rapport de la période de soudage par impulsions est réglé pour être plus élevé sur un côté en avant de la position centrale de la trajectoire en spirale dans la direction de soudage, tandis qu'un rapport de la période de soudage par court-circuit est réglé pour être plus élevé sur un côté en arrière dans la direction de soudage.

11. Dispositif de soudage à l'arc (1) pour le soudage en alimentant, vers une cible de soudage (W), un fil de soudage (15) qui est une électrode consommable, et en générant un arc entre le fil de soudage (15) et la cible de soudage (W),
la cible de soudage (W) comprenant un premier élément (W1) et un deuxième élément (W2), dans lequel le premier élément (W1) et le deuxième élément (W2) sont agencés pendant le soudage pour être en butée l'un contre l'autre à une position de frontière (Wb) entre le premier élément (W1) et le deuxième élément (W2), le dispositif comprenant :
une unité de soudage (10) configurée pour conduire le soudage tout en déplaçant une torche de soudage (11) dans un mouvement de tissage de sorte que la torche de soudage (11) traverse la position de frontière entre le premier élément (W1) et le deuxième élément (W2) alternativement plusieurs fois ; et
un contrôleur (30) configuré pour commander un fonctionnement de l'unité de soudage (10),
le contrôleur (30) étant configuré pour commander le fonctionnement de l'unité de soudage (10) de sorte que, pendant le mouvement de tissage, le premier élément (W1) est soumis à un premier soudage et le deuxième élément (W2) est soumis à un deuxième soudage,
le premier soudage comprenant au moins un soudage par court-circuit,
le deuxième soudage comprenant au moins un soudage par impulsions,
dans au moins l'un du premier soudage ou du deuxième soudage, un courant de soudage en courant alternatif étant amené à circuler à travers le fil de soudage (15) et la cible de soudage (W) de sorte qu'une période de polarité inverse dans laquelle le fil de soudage (15) sert d'électrode positive et la cible de soudage (W) d'électrode négative, et une période de polarité directe dans laquelle le fil de soudage (15) sert d'électrode négative et la cible de soudage (W) d'électrode positive, sont alternativement répétées plusieurs fois,
**caractérisé en ce qu'**au moins l'un du premier soudage ou du deuxième soudage comprend un troisième soudage dans lequel une période de soudage par court-circuit pour le soudage par court-circuit et une période de soudage par impulsions pour le soudage par impulsions sont commutées de l'une à l'autre plusieurs fois.
